# EUROPÄISCHE PATENTSCHRIFT

(11) **EP 0 808 540 B1**
(45) Veröffentlichungstag und Bekanntmachung des Hinweises auf die Patenterteilung: **07.06.2000**
(21) Anmeldenummer: 96900521.4
(22) Anmeldetag: 18.01.1996
(51) Int. Cl.: H04M 3/22, H04Q 3/00, H04Q 1/26

(54) **VERFAHREN ZUR EINLEITUNG DER FERNWARTUNG EINER FERNSPRECHNEBENSTELLENANLAGE**
METHOD OF INITIATING REMOTE MAINTENANCE OF A PRIVATE BRANCH EXCHANGE
PROCEDE D'AMORCAGE DE L'ENTRETIEN A DISTANCE D'UNE INSTALLATION TELEPHONIQUE D'ABONNE A POSTES SUPPLEMENTAIRES

(30) Priorität: 08.02.1995 DE 19504078
(43) Veröffentlichungstag der Anmeldung: 26.11.1997
(73) Patentinhaber: ROBERT BOSCH GMBH, 70442 Stuttgart (DE)
(72) Erfinder: RUPPERT, Manfred, D-61449 Steinbach (DE); CUNY, Georges, D-61118 Bad Vilbel (DE)
(86) Internationale Anmeldenummer: DE9600059
(87) Internationale Veröffentlichungsnummer: WO9625001

(56) Entgegenhaltungen:
- DE-A- 2 839 172
- DE-A- 3 715 773

## Beschreibung

Die Erfindung betrifft ein Verfahren zur Einleitung der Fernwartung einer am öffentlichen Fernsprechnetz angeschlossenen Fernsprechnebenstellenanlage, wobei die Fernwartung durch eine am öffentlichen Fernsprechnetz angeschlossene Serviceeinrichtung durchgeführt wird und zwischen der Fernsprechnebenstellenanlage und der Serviceeinrichtung über das öffentliche Fernsprechnetz eine Verbindung zum Austausch von Informationen, Meldungen, Daten, usw. herstellbar ist.

Zur Einsparung von Wegekosten und unnötigen Arbeitsstunden wird immer mehr dazu übergegangen, die Wartung von Fernsprechnebenstellenanlagen durch Serviceeinrichtungen durchzuführen, welche über das öffentliche Fernsprechnetz mit der zu wartenden Fernsprechnebenstellenanlage verbunden werden. Unter Fernwartung soll die Überprüfung der Funktionsfähigkeit der Fernsprechnebenstellenanlage, das Einlesen von Programmen, die Zuteilung von Leistungsmerkmalen zu bestimmten Anschlüssen der Fernsprechnebenstellenanlage, usw. verstanden werden. Unter dem Begriff Fernwartung fallen keine Alarmmeldungen, welche aufgrund von Defekten selbsttätig von der Fernsprechnebenstellenanlage an eine Serviceeinrichtung gemeldet werden.

In der DE 36 31 168 A1 wird ein Verfahren zur Fernwartung eines digitalen, mikroprozessorgesteuerten Vermittlungssystems beschrieben, bei welchem eine externe Teilnehmereinrichtung mit einem Personalcomputer verbindbar ist, wobei zwischen dem Personalcomputer und der Steuereinrichtung des Vermittlungssystems Informationen austauschbar sind.

Wird nun das öffentliche Fernsprechnetz für den Verbindungsaufbau zwischen einer Serviceeinrichtung und einer Fernsprechnebenstellenanlage herangezogen, so besteht die Gefahr, daß auch von nichtautorisierten Serviceeinrichtungen Wartungsarbeiten an einer Fernsprechnebenstellenanlage durchgeführt werden können. Eine derartige Wartung kann zwar aus wirtschaftlichen Gründen im Interesse des Betreibers der Fernsprechnebenstellenanlage liegen, dies steht jedoch dem Interesse des Herstellers der Fernsprechnebenstellenanlage oder der autorisierten Serviceeinrichtung entgegen.

Die Aufgabe der Erfindung besteht nun darin, ein Verfahren der eingangs genannten Art anzugeben, welches die nichtautorisierte Fernwartung von Fernsprechnebenstellenanlagen verhindert.

Diese Aufgabe wird durch die Merkmale des Anspruchs 1 gelöst.

Nur dann, wenn das von der Serviceeinrichtung an die Fernsprechnebenstellenanlage übermittelte Paßwort mit demjenigen Paßwort übereinstimmt, welches in der Fernsprechnebenstellenanlage eingespeichert ist, kann von der Serviceeinrichtung eine Fernwartung in der betreffenden Fernsprechnebenstellenanlage durchgeführt werden. Es muß lediglich sichergestellt werden, daß eine nicht autorisierte Serviceeinrichtung keine Möglichkeit hat, sich bei der Leitstelle als autorisierte Serviceeinrichtung zu erkennen zu geben.

Vorteilhafte Weiterbildungen der Erfindung ergeben sich aus den abhängigen Ansprüchen.

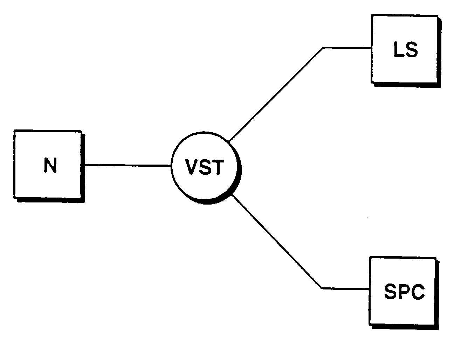

Die Erfindung wird anhand eines Ausführungsbeispiels näher erläutert, welches in der Zeichnung dargestellt ist.

An einer öffentlichen Vermittlungsstelle VSt ist eine Fernsprechnebenstellenanlage N, eine erste Serviceeinrichtung SPC und eine Leitstelle LS angeschlossen. Während der Anschluß der Fernsprechnebenstellenanlage N über sogenannte Amtsleitungen erfolgt, sind die Serviceeinrichtung SPC und die Leitstelle LS wie normale Teilnehmer an der öffentlichen Vermittlungsstelle VSt angeschlossen. Bei der öffentlichen Vermittlungsstelle VSt kann es sich um eine analoge oder auch um eine digitale Vermittlungsanlage handeln, ebenso können die genannten Anschlußleitungen sowohl als analoge oder auch als digitale Anschlußleitungen ausgebildet sein. Es ist lediglich vorauszusetzen, daß über die Anschlußleitungen sämtlicher genannter Einrichtungen die Übermittlung digitaler Informationen möglich ist. Dies kann bei analogen Anschlußleitungen mit Hilfe von Modems geschehen.

In der Zeichnung wird nur eine öffentliche Vermittlungsstelle VSt und eine Fernsprechnebenstellenanlage N gezeigt. Es ist jedoch denkbar, daß eine Vielzahl von Fernsprechnebenstellenanlagen an der öffentlichen Vermittlungsstelle VSt angeschlossen sind. Ebenso können auch mehrere Serviceeinrichtungen SPC vorhanden sein, welche mit einer gemeinsamen Leitstelle LS zusammenarbeiten. Weiterhin ist die Anwendung der Erfindung nicht auf die Konfiguration gemäß des in der Zeichnung angegebenen Blockschaltbildes beschränkt, vielmehr kann auch anstelle der öffentlichen Vermittlungsstelle VSt ein ganzes öffentliches Fernsprechnetz treten, welches aus einer Vielzahl von Vermittlungsstellen VSt besteht, wobei an einer Vermittlungsstelle beispielsweise die Leitstelle LS und an verschiedenen anderen Vermittlungsstellen Serviceeinrichtungen SPC und Fernsprechnebenstellenanlagen N angeschlossen sind.

Es wird nun davon ausgegangen, daß für eine Vielzahl von Fernsprechnebenstellenanlagen N eine oder auch mehrere Serviceeinrichtungen SPC zuständig sind, welche über das öffentliche Fernsprechnetz mit der Fernsprechnebenstellenanlage N zur Durchführung einer Fernwartung in Verbindung treten können. Die Fernsprechnebenstellenanlage weist hierzu einen besonderen Wartungsanschluß auf, welcher entweder durch eine besondere Anschlußleitung mit der öffentlichen Vermittlungsstelle VSt verbunden ist oder dieser Wartungsanschluß ist ein Anschluß am nicht gezeigten Koppelfeld der Fernsprechanlage, welcher durch Eingabe einer bestimmten Rufnummer in die Fernsprechnebenstellenanlage N anwählbar ist.

Zur Einleitung einer Fernwartung in der Fernsprechnebenstellenanlage N wird zunächst von der Serviceeinrichtung SPC eine Fernsprechverbindung zur Leitstelle LS über die öffentliche Vermittlungsstelle VSt veranlaßt. Im Zuge der Verbindung wird anschließend von der Serviceeinrichtung SPC eine Information über deren Identität und anschließend die Rufnummer des Wartungsanschlusses der Fernsprechnebenstellenanlage N zur Leitstelle LS übermittelt. Dort findet eine Überprüfung dieser Informationen statt, wobei dahingehend untersucht wird, ob die betreffende Serviceeinrichtung SPC zur Durchführung von Wartungsarbeiten bei der betreffenden Fernsprechnebenstellenanlage N berechtigt ist. Liegt eine derartige Berechtigung vor, wird in der Leitstelle LS ein Paßwort erzeugt und gleichzeitig von einem der betroffenen Anschlüsse (LS, SPC) die Auslösung der Verbindung veranlaßt.

Die Leitstelle LS veranlaßt nun selbsttätig einen Verbindungsaufbau zwischen der Leitstelle LS und der betreffenden Fernsprechnebenstellenanlage N und zwar zu dem betreffenden Wartungsanschluß derselben. Sobald die Verbindung durchgeschaltet ist, wird von der Leitstelle LS ein Paßwort zur Fernsprechnebenstellenanlage übertragen und dort entweder in der zentralen Steuereinrichtung derselben oder auch in einer Wartungseinrichtung derselben eingespeichert. Anschließend erfolgt die Auslösung der Verbindung auf Veranlassung der Leitstelle LS, welcher eine Quittierung des empfangenen Paßwort vorausgegangen sein kann. Nun wird auf Veranlassung der Leitstelle LS eine Verbindung zwischen dieser und der Serviceeinrichtung SPC über die öffentliche Vermittlungsstelle VSt einer Verbindung aufgebaut, damit von der Leitstelle LS das Paßwort zur Serviceeinrichtung SPC übertragen werden kann. Dieses Paßwort wird ebenfalls in der Serviceeinrichtung SPC eingespeichert. Anschließend wird die Verbindung zwischen den beiden Anschlüssen LS und SPC wieder ausgelöst.

Erst jetzt ist die Serviceeinrichtung SPC in der Lage, eine Fernwartung in der Fernsprechnebenstellenanlage N durchzuführen. Hierzu wird auf Veranlassung der Serviceeinrichtung SPC eine Verbindung über die öffentliche Vermittlungsstelle VSt zur Fernsprechnebenstellenanlage N und zwar zu deren Wartungsanschluß aufgebaut und anschließend das Paßwort von der Serviceeinrichtung SPC zur Fernsprechnebenstellenanlage N übertragen. Nur dann, wenn beide Paßworte übereinstimmen, kann die Serviceeinrichtung SPC entsprechende Wartungsarbeiten in der Fernsprechnebenstellenanlage N durchführen.

Nachdem durch eine entsprechende Tastenbetätigung in der Serviceeinrichtung SPC durch eine Bedienungsperson der Verbindungsaufbau zur Leitstelle LS veranlaßt worden ist, laufen die weiteren beschriebenen Vorgänge völlig selbsttätig ab. In der Serviceeinrichtung SPC erhält die Bedienungsperson eine entsprechende Anzeige, sobald das von der Leitstelle LS übermittelte Paßwort dort eingespeichert worden ist. Erst dann kann von der Serviceeinrichtung SPC eine entsprechende Fernwartung in der Fernsprechnebenstellenanlage N durchgeführt werden. Sobald eine neue Verbindung zwischen der Serviceeinrichtung SPC und der Fernsprechnebenstellenanlage N für einen neuen Vorgang zur Fernwartung notwendig wird, wird ein neues Paßwort benötigt. Zur Erhöhung der Sicherheit kann das in der Fernsprechnebenstellenanlage eingespeicherte Paßwort auch nach Ablauf einer bestimmten Zeit innerhalb der Fernsprechnebenstellenanlage N als ungültig gekennzeichnet werden, so daß die Serviceeinrichtung SPC gezwungen ist, die beschriebenen Vorgänge erneut durchzuführen.

Es ist denkbar, zur Erhöhung der Sicherheit in der Leitstelle LS sämtliche Anrufe von Serviceeinrichtungen SPC zu protokollieren, wobei auch die Identität der betreffenden Serviceeinrichtung SPC und der betreffenden Fernsprechnebenstellenanlage N festgehalten wird. Auf diese Weise lassen sich Versuche durch nicht autorisierte Serviceeinrichtungen SPC, Fernwartungsarbeiten in einer Fernsprechnebenstellenanlage N leicht erkennen.

## Patentansprüche

1. Verfahren zur Einleitung der Fernwartung einer am öffentlichen Fernsprechnetz angeschlossenen Fernsprechnebenstellenanlage, wobei die Fernwartung durch eine am öffentlichen Fernsprechnetz angeschlossene Serviceeinrichtung durchgeführt wird, und zwischen der Fernsprechnebenstellenanlage und der Serviceeinrichtung über das öffentliche Fernsprechnetz eine Verbindung zum Austausch von Informationen, Meldungen, Daten, usw. herstellbar ist, dadurch gekennzeichnet, daß die Serviceeinrichtung (SPC) zunächst eine Verbindung zu einer Leitstelle (LS) veranlaßt, daß von der Serviceeinrichtung (SPC) zur Leitstelle (LS) eine Information über die Identität der Serviceeinrichtung (SPC) und anschließend die Rufnummer eines Wartungsanschlusses der Fernsprechnebenstellenanlage (N) übertragen wird, daß in der Leitstelle (LS) eine Überprüfung dieser Information erfolgt, daß in der Leitstelle (LS) bei positivem Prüfungsergebnis ein Paßwort erzeugt wird, daß die Verbindung zwischen der Leitstelle (LS) und der Serviceeinrichtung (SPC) ausgelöst wird, daß durch die Leitstelle (LS) eine Verbindung zwischen dieser und der Fernsprechnebenstellenanlage (N) veranlaßt wird, daß der Fernsprechnebenstellenanlage (N) dieses Paßwort übermittelt und dort eingespeichert wird, daß diese Verbindung anschließend wieder ausgelöst wird, daß die Leitstelle (LS) eine Verbindung zu der Serviceeinrichtung (SPC) veranlaßt, daß das Paßwort von der Leitstelle (LS) zur Serviceeinrichtung (SPC) übermittelt und dort eingespeichert wird und daß die Serviceeinrichtung (SPC) nur dann über den Wartungsanschluß Zugang zu der Fernsprechnebenstellenanlage (N) erhält, wenn das von dieser übermittelte Paßwort mit dem in der Fernsprechnebenstellenanlage (N) eingespeicherten Paßwort übereinstimmt.

2. Verfahren nach Anspruch 1, dadurch gekennzeichnet, daß für jede Verbindung zwischen der Serviceeinrichtung (SPC) und der Fernsprechnebenstellenanlage (N) ein neues Paßwort benötigt wird.

3. Verfahren nach einem der Ansprüche 1 oder 2, dadurch gekennzeichnet, daß die Leitstelle (LS) als Leitstelle für eine Vielzahl von ersten Serviceeinrichtungen (SPC) vorgesehen ist.

4. Verfahren nach einem der Ansprüche 1 bis 3, dadurch gekennzeichnet, daß das in der Fernsprechnebenstellenanlage (N) eingespeicherte Paßwort nach Ablauf einer bestimmten Zeit als ungültig gekennzeichnet wird.

## Claims

1. Method of initiating remote maintenance of a private branch telephone exchange which is connected to a public telephone network, the remote maintenance being carried out by means of a service device which is connected to the public telephone network, it being possible to establish between the private branch telephone exchange and the service device via the public telephone network a connection for exchanging information, messages, data etc., characterized in that the service device (SPC) initially brings about a connection to a control centre (LS), in that information relating to the identity of the service device (SPC), and then the call number of a maintenance port of the private branch telephone exchange (N), are transmitted from the service device (SPC) to the control centre (LS), in that this information is tested in the control centre (LS), in that when there is a positive test result a password is generated in the control centre (LS), in that the connection between the control centre (LS) and the service device (SPC) is released, in that the connection between the control centre (LS) and the private branch telephone exchange (N) is brought about by the control centre (LS), in that this password is transferred to the private branch telephone exchange (N) and stored there, in that this connection is subsequently released again, in that the control centre (LS) brings about a connection to the service device (SPC), in that the password is transferred from the control centre (LS) to the service device (SPC) and stored there, and in that the service device (SPC) receives access to the private branch telephone exchange (N) via the maintenance port only if the password transferred by said service device (SPC) corresponds to the password stored in the private branch telephone exchange (N).

2. Method according to Claim 1, characterized in that a new password is required for each connection between the service device (SPC) and the private branch telephone exchange (N).

3. Method according to one of Claims 1 or 2, characterized in that the control centre (LS) is provided as a control centre for a plurality of first service devices (SPC).

4. Method according to one of Claims 1 to 3, characterized in that the password stored in the private branch telephone exchange (N) is characterized as invalid after a specific time has expired.

## Revendications

1. Procédé de lancement d'une télémaintenance dans installation téléphonique privée reliée à un réseau téléphonique public selon lequel la télémaintenance est effectuée par une installation de service reliée au réseau téléphonique public, et entre l'installation téléphonique publique et l'installation de service, on établit une liaison par le réseau téléphonique public pour échanger des informations, des annonces, des données ou autres...,
caractérisé en ce que
• l'installation de service (SPC) établit tout d'abord une liaison avec un poste direction (LS),
• l'installation de service (SPC) transmet vers le poste directeur (LS), une information concernant l'identité de l'installation de service (SPC), puis le numéro d'appel d'une borne d'entretien de l'installation téléphonique privée (N),
• le poste directeur (LS) vérifie cette information,
• pour un résultat positif du contrôle, le poste directeur (LS) génère un mot de passe qui déclenche la liaison entre le poste directeur (LS) et l'installation de service (SPC),
• on établit une liaison entre le poste directeur (LS) et l'installation téléphonique privée (N),
• on transmet ce mot de passe à cette installation téléphonique privée (N) et on l'enregistre dans celle-ci,
• ensuite on ouvre de nouveau cette liaison et le poste directeur (LS) établit une liaison avec l'installation de service (SPC),
• le mot de passe est transmis par l'installation directrice (LS) à l'installation de service (SPC) pour y être enregistré et,
• l'installation de service (SPC) ne peut accéder que par la borne de branchement de maintenance à l'installation téléphonique privée (N) que si le mot de passe transmis correspond au mot de passe mémorisé dans l'installation téléphonique privée (N).

2. Procédé selon la revendication 1,
caractérisé en ce que
pour chaque liaison entre l'installation de service (SPC) et l'installation téléphonique privée (N), il faut un nouveau mot de passe.

3. Procédé selon l'une des revendications 1 ou 2,
caractérisé en ce que
le poste directeur (LS) est prévu comme poste directeur pour un grand nombre de premières installations de service (SPC).

4. Procédé selon l'une quelconque des revendications 1 à 3,
caractérisée en ce que
le mot de passe mémorisé dans l'installation téléphonique privée (N), est considéré comme non valable à la fin d'une durée prédéterminée.
